# EUROPÄISCHE PATENTANMELDUNG

(11) **EP 2 963 355 A1**
(43) Veröffentlichungstag der Anmeldung: **06.01.2016**
(21) Anmeldenummer: 15172469.7
(22) Anmeldetag: 17.06.2015
(51) Int. Cl.: F24H 9/20, F24D 19/10, G05B 15/00

(54) **BEDIENELEMENT FÜR EIN HAUSTECHNIKGERÄT UND HAUSTECHNIKGERÄT**

(30) Priorität: 30.06.2014 DE 102014009472
(71) Anmelder: Stiebel Eltron GmbH & Co. KG, 37603 Holzminden (DE)
(72) Erfinder: Schäfer, Daniel, 32676 Lügde (DE); Grobe, Michael, 37671 Höxter (DE)

(57) **Zusammenfassung**

Die Erfindung betrifft ein Bedienelement (2) für ein Haustechnikgerät (1), insbesondere für einen Durchlauferhitzer, eine Solaranlage, eine Wärmepumpe, ein Lüftungsgerät, eine Fotovoltaikanlage oder einen Warmwasserbereiter, zum Einstellen von Parametern des Haustechnikgeräts (1). Dabei weist das Bedienelement (2) eine Elektronikplatine (28) zur Aufnahme einer Elektronikbaugruppe (283) auf. Weiterhin weist das Bedienfeld (2) ein mit der Elektronikplatine (28) verbundenes erstes Bedienfeld (23) mit einem Lautsprecher (26) auf. Daneben betrifft die Erfindung ein Haustechnikgerät (1) mit einem Bedienelement (2).

## Beschreibung

Die Erfindung betrifft ein Bedienelement für ein Haustechnikgerät, insbesondere Durchlauferhitzer, Solaranlage, Wärmepumpe, Lüftungsgerät, Fotovoltaikanlage oder Warmwasserbereiter, zum Einstellen von Parametern des Haustechnikgeräts, wobei das Bedienelement eine Elektronikplatine zur Aufnahme einer Elektronikbaugruppe aufweist. Weiterhin betrifft die Erfindung ein Haustechnikgerät, insbesondere Durchlauferhitzer, Solaranlage, Wärmepumpe, Lüftungsgerät, Fotovoltaikanlage oder Warmwasserbereiter.

Haustechnikgeräte verfügen über Bedienelemente, die dem Benutzer die Einstellung von bestimmten Parametern ermöglichen. So können beispielsweise eine Wunschtemperatur oder sonstige gewünschte Voreinstellungen mittels eines Bedienelementes gewählt werden.

Die DE 196 52 130 A1 zeigt beispielsweise ein Bedienteil eines elektrischen Durchlauferhitzers, bei dem das Bedienteil einen Einstellknopf zum Einstellen einer Temperatur sowie Speichertasten aufweist. Das Bedienteil ist wahlweise in eine an einer Gerätekappe des Durchlauferhitzers ausgebildeten Aufnahme eingesetzt oder an einem vom Durchlauferhitzer entfernten Ort angebracht, wobei das Bedienteil drahtgebunden mit dem Durchlauferhitzer verbunden ist.

In der DE 10 2008 015 385 A1 ist eine Vorrichtung zum Regeln oder Steuern einer Wärmepumpe, einer Solaranlage, einer Fotovoltaikanlage, eines Lüftungsgerätes oder eines Warmwasserbereiters gezeigt, die ein Eingabefeld und ein Display enthält. Hinter dem Eingabefeld ist wenigstens ein kapazitiver Sensor angeordnet.

Aus der DE 10 2005 049 802 A1 geht eine Haushaltsgerätebedienvorrichtung hervor mit einem berührungsempfindlichen, ringförmigen Sensorfeld, das wenigstens zwei um ein Zentrum angeordnete Sensorflächen zum Detektieren eines Winkels eines Berührpunktes umfasst.

Aus der WO 03/088176 A1 ist ein Positionssensor für ein Objekt bekannt. Dieser Sensor umfasst einen Touch-Sensor, der als geschlossene Schleife ausgebildet ist und dazu geeignet ist, die Bewegung eines Objekts in der Nähe der geschlossenen Schleife zu erfassen. Weiterhin ist ein Prozessor vorgesehen, der eine Aktion aus der erkannten Bewegung generiert.

Die DE 21 2004 000 044 U1 zeigt einen kapazitiven Positionssensor zum Detektieren einer Position eines Objekts mit einem Erfassungselement, einer Mehrzahl von Anschlüssen, einer Mehrzahl von Erfassungskanälen und einem Prozessor, der im Betrieb fähig ist, durch Vergleichen der Signale von der Erfassungskanälen zu bestimmen, über welchem Abschnitt das Objekt positioniert ist, und die Position des Objektes innerhalb dieses Abschnitts durch Vergleichen wenigstens der Signale von den diesen Abschnitt umspannenden Anschlüssen zu bestimmen.

In der US 2003/0076306 A1 ist ein Mediengerät mit einem Touch-Pad gezeigt.

Aus der GB 2 050 621 A geht ein Bedienfeld mit einem Touch-Sensor hervor, bei dem eine Dateneingabe durch eine Drehbewegung etwa eines Fingers erfolgt. Dabei sind ineinandergreifende Elektroden auf einer inneren Oberfläche des Bedienfelds angeordnet.

Die DE 10 2012 210 563 A1 zeigt eine Bedienvorrichtung zum Betätigen eines Sensorbildschirms. Die Bedienvorrichtung ist als ein Aufsatz für den Sensorbildschirm ausgestaltet und weist mindestens ein auf dem Sensorbildschirm lösbar aufsetzbares, bewegbares Betätigungselement, bei dessen Bewegung der Sensorbildschirm betätigbar ist, auf.

Aus der DE 20 2005 004 546 U1 geht ein Durchlauferhitzer hervor, der eine Einrichtung zum Steuern und/oder Regeln aufweist und mittels einer Fernbedienung fernbedienbar ist, wobei der Durchlauferhitzer netzwerkfähig ausgebildet ist.

Ausgehend vom Stand der Technik liegt der Erfindung die Aufgabe zugrunde, ein Bedienelement für ein Haustechnikgerät bereitzustellen, das eine einfache und komfortable Bedienung des Haustechnikgeräts ermöglicht und eine verbesserte Lösung gegenüber dem Stand der Technik darstellt. Ebenso liegt der Erfindung die Aufgabe zugrunde, ein entsprechendes Haustechnikgerät bereitzustellen. Zumindest soll eine alternative Lösung zum Stand der Technik vorgeschlagen werden.

Diese Aufgabe wird durch die Merkmale des Anspruchs 1 gelöst. Vorteilhafte Ausgestaltungen der Erfindung sind in den Unteransprüchen gegeben. Ebenso wird die Aufgabe durch die Merkmale des Anspruchs 15 gelöst.

Danach weist das Bedienelement ein mit der Elektronikplatine verbundenes erstes Bedienfeld mit einem Lautsprecher auf.

Die Erfindung betrifft den Gedanken, am Haustechnikgerät eine Sprachausgabe vorzusehen. Dabei können dem Benutzer in einer Ausgestaltung der Erfindung Benutzereinstellungen oder Menüfunktionen angesagt werden, was den Bedienkomfort erhöht, vor allem für Benutzer, die Schwierigkeiten haben, Menüanzeigen zu lesen, insbesondere ältere Menschen. In einer weiteren Ausführungsform können über den Lautsprecher Radioprogramme, Unterhaltungsmedien und/oder Hinweistöne ausgesendet werden.

Als Elektronikbaugruppe ist vorzugsweise insbesondere eine Regelung, eine Steuerung und/oder eine Kommunikationsbaugruppe, beispielsweise für Funk und/oder WLAN verwendet.

In einem Ausführungsbeispiel ist das Bedienelement dem Aufnahmeraum entnehmbar.

In einem weiteren Ausführungsbeispiel ist das Bedienelement fest mit dem Aufnahmeraum verbunden.

In einer vorteilhaften Ausgestaltung der Erfindung ist der Lautsprecher hinter dem ersten Bedienfeld angeordnet. Hierdurch sind sowohl Lautsprecher als auch Bedienfeld platzsparend in das Bedienfeld integrierbar. Zudem ist hierdurch ein ansprechendes Design erreicht.

In einem weiteren Ausführungsbeispiel ist der Lautsprecher an einen auf der Elektronikplatine angeordneten Verstärker als Audioverstärker angeschlossen.

Die Elektronikplatine weist vorzugsweise einen UKW-Empfänger, einen WEB-Empfänger und/oder einen DAB-Empfänger zum Empfang von Rundfunk- und/oder Internetdaten auf. Der UKW-Empfänger dient dabei dem Empfang von Radiokurzwellen, der WEB-Empfänger dem Empfang von internetbasiertem Hörfunk und der DAB-Empfänger dem Empfang von digitalem Hörfunk.

Gemäß einer vorteilhaften Ausgestaltung der Erfindung umfasst das erste Bedienfeld ein Potentiometer und/oder einen Taster. Mit dem Potentiometer bzw. Taster können verschiedene Parameter des Haustechnikgerätes eingestellt werden.

Als Taster sind vorzugsweise kapazitive und/oder elektromechanische Tasten verwendet.

In einer weiteren Ausführungsform umfasst das erste Bedienfeld einen Inkrementalgeber und/oder einen Touchscreen.

Gemäß einer weiteren vorteilhaften Ausgestaltung der Erfindung ist ein ringförmiger Touchsensor (Touchwheel) und/oder ein linienförmiger kapazitiver Touchsensor (Slider) verwendet.

In einem weiteren Ausführungsbeispiel weist das Bedienelement eine Entwässerungsöffnung auf. Mittels der Entwässerungsöffnung kann in dem Bedienelement entstehendes Kondenswasser nach außen abgeleitet werden.

In einer weiteren vorteilhaften Ausgestaltung der Erfindung ist der Lautsprecher gegenüber dem Lautsprechergitter versetzt, beispielsweise nach oben versetzt angeordnet. Dadurch kann eindringendes Wasser direkt und restlos wieder auslaufen.

Gemäß einem weiteren Ausführungsbeispiel besteht der Lautsprecher aus einem wasserfesten Material, insbesondere Kunststoff, und/oder weist eine Stoffmembran auf. Hierdurch ist der Lautsprecher vor eindringender Feuchtigkeit geschützt. Vorzugsweise besteht dabei die Stoffmembran aus einem wasserabweisenden Material. In einer vorteilhaften Ausgestaltung ist die Stoffmembran direkt hinter dem Lautsprechergitter angeordnet.

Vorzugsweise ist an der Elektronikplatine wenigstens ein USB-Anschluss zur Aufnahme eines USB-Moduls, beispielsweise eines WLAN-Sticks, vorgesehen.

In einer weiteren vorteilhaften Ausgestaltung der Erfindung weist das Bedienelement ein mit der Elektronikplatine verbundenes zweites Bedienfeld auf.

In einer ersten Ausgestaltung der Erfindung ist das zweite Bedienfeld als Anzeigeelement ausgestaltet.

In einer weiteren Ausgestaltung der Erfindung ist das zweite Bedienfeld als Touchdisplay ausgestaltet.

In Kombination mit dem ersten Bedienfeld ist hierdurch eine komfortable Bedienbarkeit gewährleitet. Mit Hilfe des ersten Bedienfeldes können beispielsweise durch Scrollen einzelne Menüpunkte angezeigt werden, die über das zweite Bedienfeld vom Nutzer ausgewählt werden können. Hierdurch sind flache Menüstrukturen abbildbar, was dem Nutzer die Bedienung erleichtert. Insbesondere der technikferne Nutzer kann das Haustechnikgerät über das erste Bedienfeld und das zweite Bedienfeld intuitiv bedienen.

In einer vorteilhaften Ausgestaltung der Erfindung beinhaltet das zweite Bedienfeld Schnellwahltasten. Beispielsweise kann einer Schnellwahltaste die Funktion "Temperatur" zugeordnet sein. Der Benutzer wählt nun über die Schnellwahltaste die Funktion "Temperatur" aus und nimmt dann über das zweite Bedienfeld eine Änderung der Tastatur vor.

Vorzugsweise ist das erste Bedienfeld als Touch-Wheel und das zweite Bedienfeld als Touchdisplay ausgestaltet. Beide Bedienfelder werden durch das Gehäuse bedient, so dass keine Öffnung im Gehäuse notwendig ist, so dass eine zusätzliche Dichtung entfallen kann.

Gemäß einem weiteren Ausführungsbeispiel sind der Lautsprecher, das erste Bedienfeld und/oder das zweite Bedienfeld an einem Baugruppenträger angeordnet. An diesem Baugruppenträger sind diese Komponenten vormontierbar. Der Baugruppenträger kann dann mit den bereits vormontierten Komponenten in ein Gehäuse des Bedienelementes oder direkt in das Haustechnikgerät eingesetzt werden. Dies erleichtert die Montage.

Gemäß einer weiteren Ausgestaltung der Erfindung weist das Bedienelement ein Gehäuse auf. Das Bedienelement ist so mit dem Gehäuse in das Haustechnikgerät einsetzbar. Dies erleichtert die Montage des Bedienelements, da das Bedienelement insgesamt zusammengebaut werden und sodann in das Haustechnikgerät eingesetzt werden kann. Sofern das Bedienelement defekt ist, kann es einfach entnommen und ausgetauscht werden. Außerdem ist das Bedienelement einfach abdichtbar.

In einem weiteren Ausführungsbeispiel ist das Bedienelement in einen Aufnahmeraum des Haustechnikgerätes einsetzbar. Das Haustechnikgerät weist somit einen Aufnahmeraum auf, der vorzugsweise in etwa die gleichen Abmessungen aufweist wie das Bedienelement. Das Bedienelement kann in diesen Raum eingesetzt werden.

In einer Ausgestaltung der Erfindung weist das Gehäuse des Bedienelements einen Deckel und eine Rückwand auf.

In einer weiteren Ausgestaltung der Erfindung weist das Gehäuse des Bedienelements lediglich einen Deckel auf. Die Komponenten des Bedienelements werden dann auf einer Rückseite durch die Begrenzung des Aufnahmeraums abgedeckt.

Vorzugsweise weist das Gehäuse des Bedienelementes einen Vorsprung auf, der in eine Nut des Aufnahmeraumes einrastet. Hierdurch ist das Bedienelement einfach und sicher in dem Aufnahmeraum befestigbar.

Die Erfindung betrifft weiterhin ein Haustechnikgerät, insbesondere Durchlauferhitzer, Solaranlage, Wärmepumpe, Lüftungsgerät, Fotovoltaikanlage oder Warmwasserbereiter mit einem Bedienelement.

In der Zeichnung zeigen
- Figur 1: ein Haustechnikgerät in einem Ausführungsbeispiel
- Figur 2: ein Bedienelement in einem Ausführungsbeispiel
- Figur 3: einen Innenansicht eines Bedienelementes in einem Ausführungsbeispiel
- Figur 4: einen Querschnitt eines Bedienelementes in einem Ausführungsbeispiel
- Figur 5: ein Bedienelement in einem Ausführungsbeispiel in einer Explosionsansicht
- Figur 6: einen Querschnitt eines Haustechnikgeräts in einem Ausführungsbeispiel
- Figur 7: einen Deckel eines Bedienfeldes in einer Detailansicht

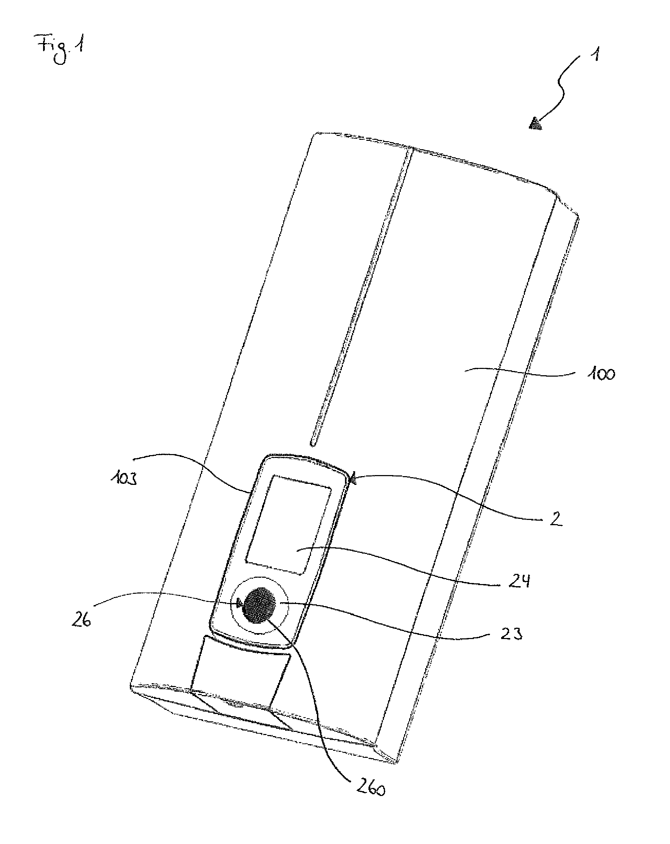

Figur 1 zeigt ein Haustechnikgerät 1 in einem Ausführungsbeispiel am Beispiel eines Durchlauferhitzers. Das Haustechnikgerät bzw. der Durchlauferhitzer 1 weist ein Gehäuse 100 mit einem Aufnahmeraum 103 auf. In den Aufnahmeraum 103 ist ein Bedienelement 2 eingesetzt. Das Bedienelement 2 weist ein erstes Bedienfeld 23 und ein zweites Bedienfeld 24 auf. Das erste Bedienfeld 23 ist als sogenanntes Touch-Wheel ausgestaltet und weist einen Lautsprecher 26 mit einem Lautsprechergitter 260 auf. Das zweite Bedienfeld 24 ist optional als Anzeigeelement oder als Touchdisplay ausgestaltet.

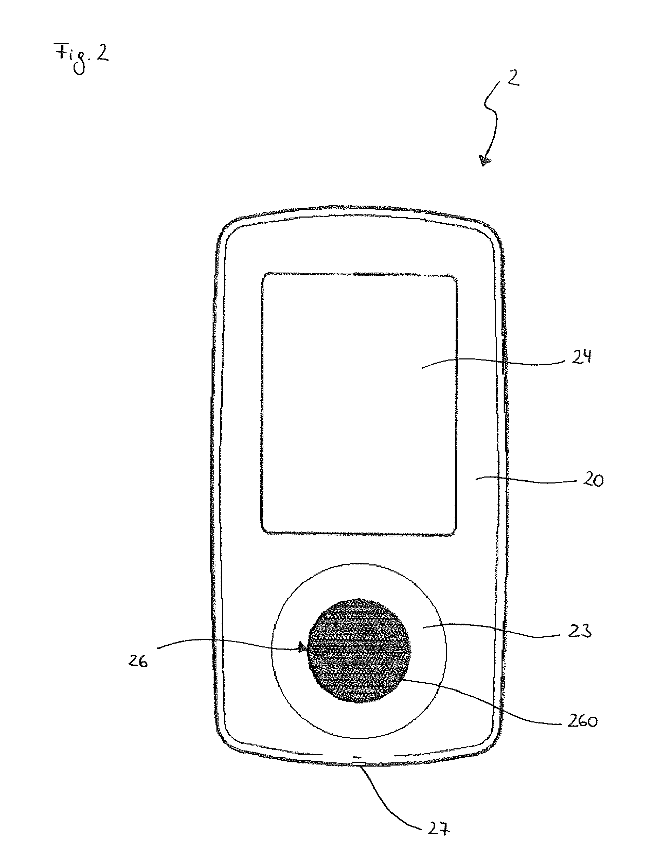

In Figur 2 ist ein Bedienelement 2 in einem Ausführungsbeispiel gezeigt. Das Bedienelement 2 weist einen Deckel 20 mit einem ersten Bedienfeld 23 und einem zweiten Bedienfeld 24 auf. Das zweite Bedienfeld 24 ist als Touch-Wheel ausgestaltet und umgibt ein Lautsprechergitter 260 eines Lautsprechers 26. Im unteren Bereich des Deckels 20 ist eine Entwässerungsöffnung 27 vorgesehen, die entstehendes Kondenswasser vom Inneren des Bedienelements 2 nach außen ableitet.

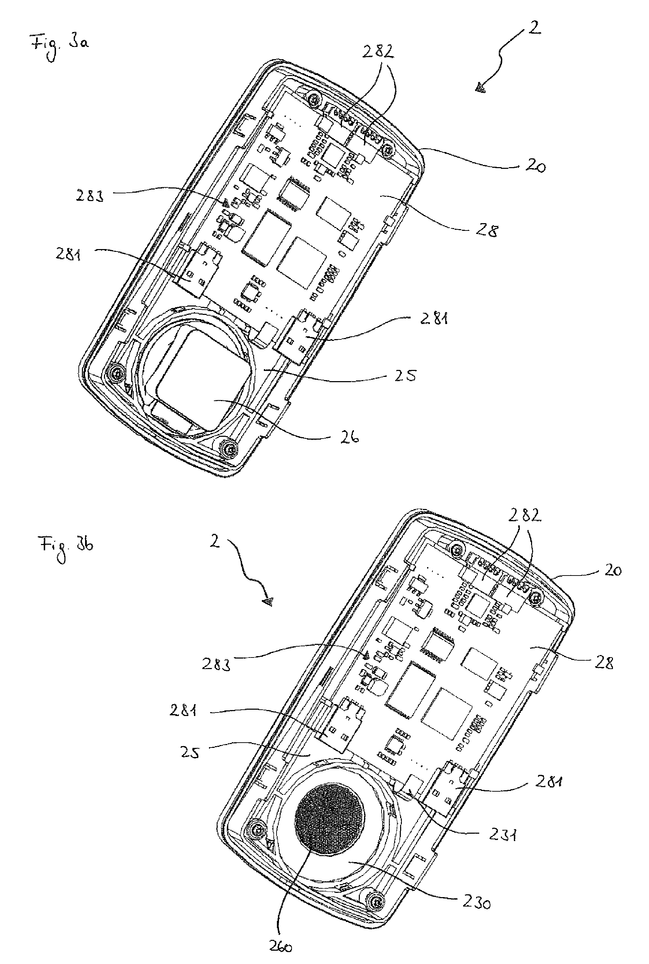

Figur 3 zeigt eine Innenansicht eines Bedienelements 2 in einem Ausführungsbeispiel. Das Bedienelement 2 weist einen Deckel 20 auf. An einem Baugruppenträger 25 ist eine Elektronikplatine 28 mit einer Elektronikbaugruppe 283 befestigt. An der Elektronikplatine 28 sind Anschlüsse 282 zum Anschluss des Bedienelements 2 an das Hauptgerät sowie zwei USB-Anschlüsse 281 vorgesehen. In Figur 3a ist zusätzlich ein Lautsprecher 26 gezeigt. Dieser Lautsprecher ist in der Ansicht gemäß Figur 3b nicht gezeigt. Unterhalb des Lautsprechers ist eine Touch-Wheel-Platine 230, die eine Verbindung 231 zur Elektronikplatine 28 aufweist, sowie ein Lautsprechergitter 260 vorgesehen.

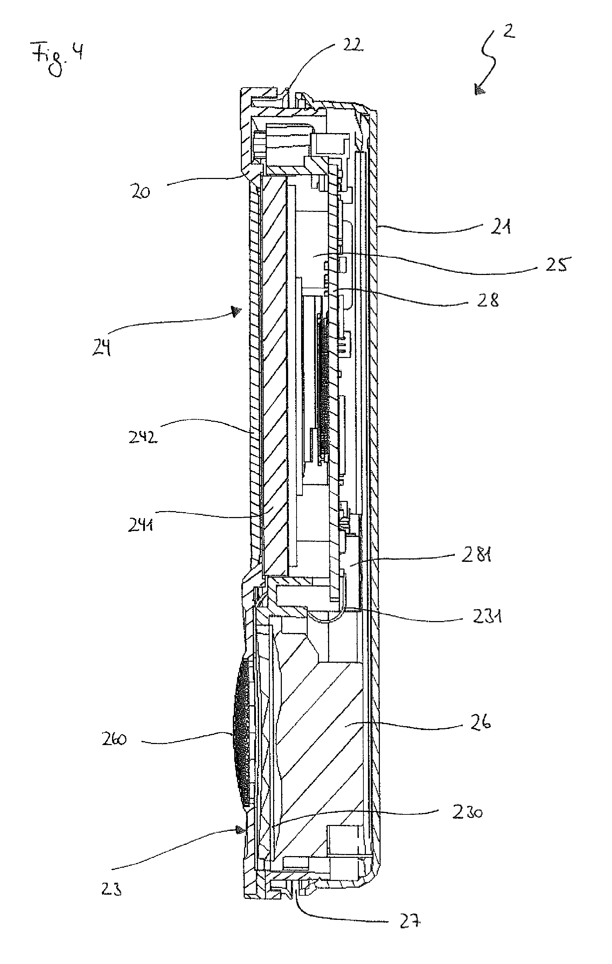

In Figur 4 ist ein Querschnitt eines Bedienelementes 2 in einem Ausführungsbeispiel gezeigt. Das Bedienelement 2 weist einen Deckel 20 und eine Rückwand 21 auf. Am Deckel 20 ist eine Dichtung 22 vorgesehen. Weiterhin weist das Bedienelement 2 einen Baugruppenträger 25 auf, an dem eine Elektronikplatine 28, ein Lautsprecher 26, eine Touch-Wheel-Platine 230, ein Anzeigeelement 241 und eine Abdeckung 242 angeordnet sind. Das Anzeigeelement 241 und die Abdeckung 242 sind einem zweiten Bedienfeld 24 zugeordnet, wobei das Anzeigeelement 241 als reines Anzeigeelement oder als TouchDisplay ausgebildet sein kann. Weiterhin ist ein erstes Bedienfeld 23 vorgesehen, das mit der Touch-Wheel-Platine 230 verbunden ist, die wiederum über eine Verbindung 231 mit der Elektronikplatine 28 verbunden ist. Der Lautsprecher 26 ist hinter dem ersten Bedienfeld 23 angeordnet und hinter der Touch-Wheel-Platine 230 positioniert. Weiterhin ist im Deckel 20 des Bedienfelds 2 ein Lautsprechergitter 260 angeordnet. Im unteren Bereich weist das Bedienelement 2 eine Entwässerungsöffnung 27 auf. Die Elektronilplatine 28 weist einen USB-Anschluss 281 auf.

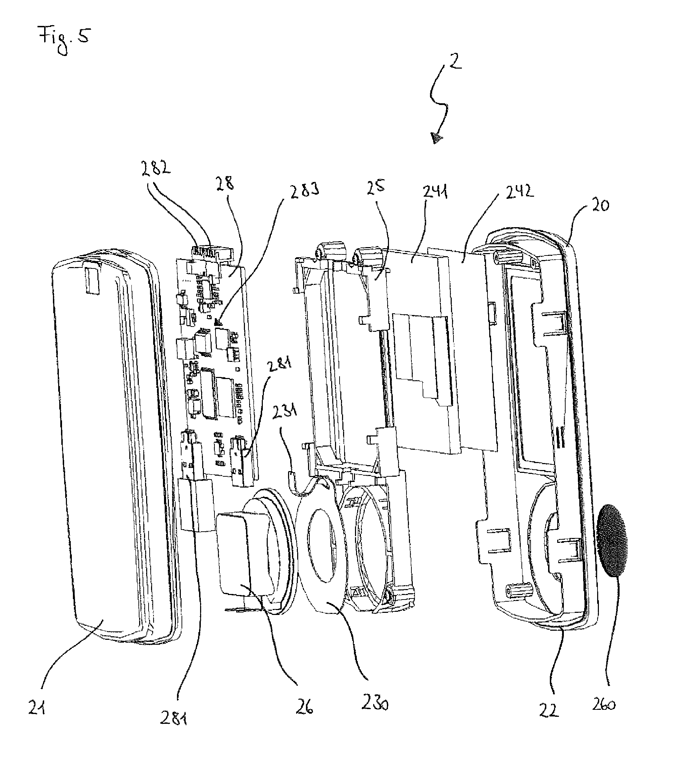

Figur 5 zeigt ein Bedienelement 2 in einem Ausführungsbeispiel in einer Explosionsansicht gezeigt. Das Bedienelement 2 weist einen Deckel 20 mit einer Dichtung 22 auf. Am Deckel 20 ist ein Lautsprechergitter 260 sowie eine Abdeckung 242 befestigbar. Hinter dem Deckel 20 ist ein Baugruppenträger 25 vorgesehen, der dazu ausgestaltet ist, verschiedene Baugruppen aufzunehmen. In diesem Ausführungsbeispiel können die folgenden Komponenten am Baugruppenträger 25 befestigt werden: eine Touch-Wheel-Platine 230 für ein erstes Bedienfeld, ein Anzeigeelement 241 für ein zweites Bedienfeld, ein Lautsprecher 26 und eine Elektronikplatine 28 mit einer Elektronikbaugruppe 283. Die Touch-Wheel-Platine 230 ist über eine Verbindung 231 mit der Elektronikplatine 28 verbindbar. An der Elektronikplatine 28 sind Anschlüsse 282 zum Anschluss des Bedienelements 2 an das Hauptgerät sowie zwei USB-Anschlüsse 281 vorgesehen. Weiterhin ist eine Rückwand 21 des Bedienelementes vorgesehen.

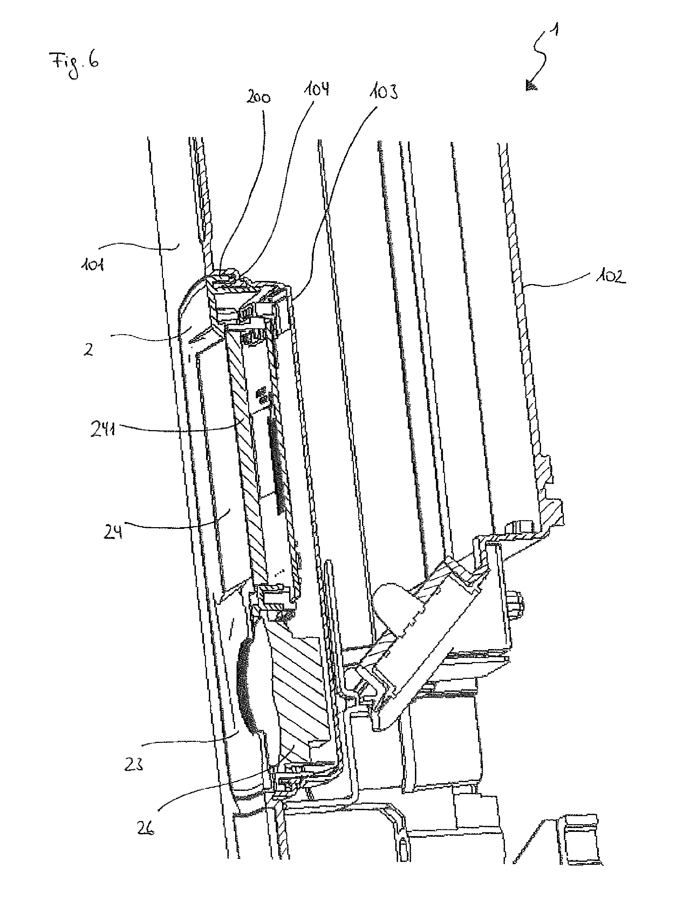

Figur 6 zeigt einen Querschnitt eines Haustechnikgerätes in einem Ausführungsbeispiel am Beispiel eines Durchlauferhitzers 1. Der Durchlauferhitzer weist eine Rückwand 102 und einen Deckel 101 auf. Der Deckel 101 weist einen Aufnahmeraum 103 zur Aufnahme eines Bedienelementes 2 auf. Das Bedienelement 2 weist einen Vorsprung 200 auf, der in eine Nut 104 des Aufnahmeraumes 103 einrastet. Das Bedienelement weist ein erstes Bedienfeld 23 mit einem Lautsprecher 26 auf. Weiterhin ist ein zweites Bedienfeld 24 mit einem Anzeigeelement 241 vorgesehen.

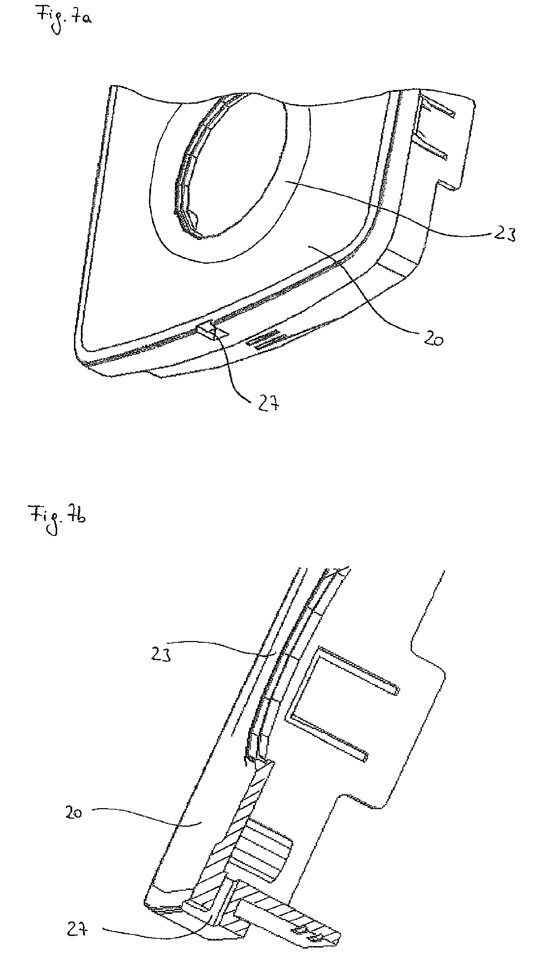

In Figur 7 ist eine Detailansicht eines Deckels 20 des Bedienelements dargestellt. Der Deckel 20 weist ein erstes Bedienfeld 23 auf. Im unteren Bereich des Deckels 20 ist eine Entwässerungsöffnung 27 vorgesehen. Figur 7a zeigt eine Schrägansicht des Deckels 20, Figur 7b einen Querschnitt durch den Deckel 20.

## Patentansprüche

1. Bedienelement (2) für ein Haustechnikgerät (1),
insbesondere Durchlauferhitzer, Solaranlage, Wärmepumpe, Lüftungsgerät, Fotovoltaikanlage oder Warmwasserbereiter,
zum Einstellen von Parametern des Haustechnikgeräts (1),
wobei das Bedienelement (2) eine Elektronikplatine (28) zur Aufnahme einer Elektronikbaugruppe (283) aufweist,
wobei das Bedienelement (2) in einen Aufnahmeraum (103) des Haustechnikgeräts (1) einsetzbar ist,
**dadurch gekennzeichnet,**
**dass** das Bedienelement (2) ein mit der Elektronikplatine (28) verbundenes erstes Bedienfeld (23) mit einem Lautsprecher (26) aufweist.

2. Bedienelement (2) nach Anspruch 1,
**dadurch gekennzeichnet,**
**dass** der Lautsprecher (26) hinter dem ersten Bedienfeld (23) angeordnet ist.

3. Bedienelement (2) nach Anspruch 1 oder 2,
**dadurch gekennzeichnet,**
**dass** der Lautsprecher (26) an einen auf der Elektronikplatine (28) angeordneten Verstärker angeschlossen ist.

4. Bedienelement (2) nach einem oder mehreren der vorhergehenden Ansprüche 1 bis 3,
**dadurch gekennzeichnet,**
**dass** die Elektronikplatine (28) einen UKW-Empfänger, einen WEB-Empfänger und/oder einen DAB-Empfänger zum Empfang von Rundfunk- und/oder Internetdaten aufweist.

5. Bedienelement (2) nach einem oder mehreren der vorhergehenden Ansprüche 1 bis 4,
**dadurch gekennzeichnet,**
**dass** das erste Bedienfeld (23) ein Potentiometer und/oder einen Taster umfasst.

6. Bedienelement (2) nach einem oder mehreren der vorhergehenden Ansprüche 1 bis 4,
**dadurch gekennzeichnet,**
**dass** das erste Bedienfeld (23) einen Inkrementalgeber und/oder einen Touchsensor umfasst.

7. Bedienelement (2) nach einem oder mehreren der vorhergehenden Ansprüche 1 bis 6,
**dadurch gekennzeichnet,**
**dass** das Bedienelement (2) eine Entwässerungsöffnung (27) aufweist.

8. Bedienelement (2) nach einem oder mehreren der vorhergehenden Ansprüche 1 bis 7,
**dadurch gekennzeichnet,**
**dass** der Lautsprecher (26) aus einem wasserfesten Material, insbesondere Kunststoff, besteht und/oder eine Stoffmembran aufweist.

9. Bedienelement (2) nach einem oder mehreren der vorhergehenden Ansprüche 1 bis 8,
**dadurch gekennzeichnet,**
**dass** an der Elektronikplatine (28) wenigstens ein USB-Anschluss (281) zur Aufnahme eines USB-Moduls, insbesondere eines WLAN-Sticks aufweist.

10. Bedienelement (2) nach einem oder mehreren der vorhergehenden Ansprüche 1 bis 9,
**dadurch gekennzeichnet,**
**dass** das Bedienelement (2) ein mit der Elektronikplatine (28) verbundenes zweites Bedienfeld (24) aufweist.

11. Bedienelement (2) nach Anspruch 10,
**dadurch gekennzeichnet,**
**dass** das zweite Bedienfeld (24) als Touchscreen ausgebildet ist.

12. Bedienelement (2) nach einem oder mehreren der vorhergehenden Ansprüche 1 bis 11,
**dadurch gekennzeichnet,**
**dass** der Lautsprecher (26), das erste Bedienfeld (23) und/oder das zweite Bedienfeld (24) an einem Baugruppenträger (25) angeordnet sind.

13. Bedienelement (2) nach einem oder mehreren der vorhergehenden Ansprüche 1 bis 12,
**dadurch gekennzeichnet,**
**dass** das Bedienelement (2) ein Gehäuse (20, 21) aufweist.

14. Bedienelement (2) nach einem oder mehreren der vorhergehenden Ansprüche 1 bis 13,
**dadurch gekennzeichnet,**
**dass** das Bedienelement (2) in einen Aufnahmeraum (103) des Haustechnikgeräts (1) einsetzbar ist.

15. Haustechnikgerät (1),
insbesondere Durchlauferhitzer, Solaranlage, Wärmepumpe, Lüftungsgerät, Fotovoltaikanlage oder Warmwasserbereiter,
mit einem Bedienelement (2) nach einem oder mehreren der vorhergehenden Ansprüche 1 bis 14.
